# EUROPEAN PATENT APPLICATION

(11) **EP 4 560 712 A1**
(43) Date of publication of application: **28.05.2025**
(21) Application number: 23875030.1
(22) Date of filing: 01.08.2023
(51) Int. Cl.: H01M 4/04, B01F 27/90, B01F 27/192, B01F 101/59

(54) **ELECTRODE SLURRY STORAGE APPARATUS FOR SECONDARY BATTERY**

(30) Priority: 06.10.2022 KR 20220127651; 06.10.2022 KR 20220178613
(71) Applicant: SK On Co., Ltd., Seoul 03161 (KR)
(72) Inventor: YANG, Ji-Yun, Daejeon 34124 (KR); KIM, In-Mok, Daejeon 34124 (KR)
(74) Representative: Stolmár & Partner Patentanwälte PartG mbB
(86) International application number: PCT/KR2023/011255
(87) International publication number: WO 2024/075960

(57) **Abstract**

Provided is an electrode slurry storage apparatus for a secondary battery, the apparatus comprising: a slurry storage tank storing an electrode slurry for a secondary battery; a degassing blade accommodated inside the slurry storage tank; and a negative pressure pump which is connected to the slurry storage tank and puts the inside of the slurry storage tank into a negative pressure state, wherein the degassing blade physically strikes air bubbles in the upper part of the slurry storage tank.

## Description

### Technical Field

The present disclosure relates to an electrode slurry storage apparatus for a secondary battery.

### Background Art

In general, unlike primary batteries, secondary batteries may be charged and discharged, and thus may be applied to devices within various fields such as digital cameras, mobile phones, laptops, hybrid cars, and electric vehicles.

Meanwhile, in order to manufacture a secondary battery electrode, a process of coating and drying an electrode slurry on a current collector is performed. The electrode slurry is manufactured by mixing an electrode active material, a binder and a solvent, and air bubbles may be included in the electrode slurry during a mixing process.

When the air bubbles are included in the electrode slurry, during the process of coating and drying the electrode slurry on the current collector, the air bubbles inside the electrode slurry may be discharged externally, forming a gas ejection hole in the electrode, which may result in electrode failure.

In order to prevent such electrode failure, it is necessary to perform a so-called defoaming process to remove air bubbles from inside the electrode slurry.

### Summary of Invention

### Technical Problem

An aspect of the present disclosure is to provide an electrode slurry storage device for a secondary battery which may minimize air bubbles remaining in an electrode slurry for the secondary battery.

Another aspect of the present disclosure is to provide an electrode slurry storage device for a secondary battery which may increase the fluidity of air bubbles in an electrode slurry for the secondary battery during a defoaming process of an electrode slurry.

### Solution to Problem

According to an embodiment of the present disclosure, provided is an electrode slurry storage apparatus for a secondary battery including: a slurry storage tank storing an electrode slurry for a secondary battery; a degassing blade accommodated inside the slurry storage tank; and a rotating unit providing driving force for rotating the degassing blade; a negative pressure pump connected to an inside of the slurry storage tank and taking the inside of the slurry storage tank into a negative pressure state, wherein the degassing blade physically strikes air bubbles within the slurry storage tank.

The electrode slurry storage apparatus for a secondary battery according to an embodiment may further include a rotating blade stirring a slurry stored inside the slurry storage tank.

In an embodiment, the rotating unit may rotate the rotating blade and the degassing blade together.

In an embodiment, the degassing blade may include a striking member, the degassing blade may be disposed in an upper portion of an internal space of the slurry storage tank, and the striking member may be disposed on a lower side of the degassing blade.

In an embodiment, the striking member may be disposed in a shape protruding from the degassing blade toward a lower portion of the slurry storage tank.

In an embodiment, the striking member may form a tapered portion in which a width thereof in a lower direction is narrow.

The electrode slurry storage apparatus for a secondary battery according to an embodiment may further include a support unit connected to the rotating unit to support the rotating unit.

In an embodiment, the rotating unit may rotate the rotating blade and the support unit together.

In an embodiment, the support unit may include a support shaft connected to one end of the rotating unit, and a stirring blade connected to the support shaft and stirring a slurry stored in the slurry storage tank.

In an embodiment, the rotating blade may include a spiral blade having a spiral shape and a linear blade.

In an embodiment, the rotating unit may include a shaft, and one end of the linear blade may be connected to the spiral blade, and the other end of the linear blade may be connected to the shaft.

In an embodiment, the linear blades may be disposed on both upper and lower sides of the shaft, and may be disposed on the shaft in a state of being obliquely inclined with respect to a rotational direction of the linear blades.

In an embodiment, the spiral blade may be disposed along an inner wall of the slurry storage tank, and the slurry stored in the slurry storage tank may move along the inner wall.

In an embodiment, the spiral blades may be provided in plural.

In an embodiment, the negative pressure pump may be provided in an upper end of the slurry storage tank.

In an embodiment, the rotating unit may include a shaft and a driving motor, and the driving motor may be connected to the shaft and may be disposed in one end of the slurry storage device, and the degassing blade may be connected to the shaft.

Furthermore, according to an embodiment of the present disclosure, provided is an electrode slurry storage apparatus for a secondary battery including: a slurry storage tank storing an electrode slurry for a secondary battery; a rotating blade stirring the slurry stored inside the slurry storage tank; a rotating unit providing driving force for rotating the rotating blade; and a negative pressure pump connected to an inside of the slurry storage tank and taking the inside of the slurry storage tank into a negative pressure state.

According to an embodiment, the rotating blade may include a spiral blade having a spiral shape and a linear blade.

According to an embodiment, the rotating unit may include includes a shaft, and one end of the linear blade may be connected to the spiral blade, and the other end of the linear blade may be connected to the shaft.

According to an embodiment, the linear blades may be disposed on both upper and lower sides of the shaft, and may be disposed on the shaft in a state of being obliquely inclined with respect to a rotational direction of the linear blades.

According to an embodiment, the spiral blade may be disposed along an inner wall of the slurry storage tank, so that the slurry stored in the slurry storage tank may move along the inner wall.

According to an embodiment, the spiral blades may be provided in plural.

According to an embodiment, the negative pressure pump may be provided in an upper end of the slurry storage tank.

According to an embodiment, the electrode slurry storage apparatus may further include a support unit connected to the rotating unit to support the rotating unit.

According to an embodiment, the rotating unit may rotate the rotating blade and the support unit together.

According to an embodiment, the support unit may include a support shaft connected to one end of the rotating unit, and a stirring blade connected to the support shaft and stirring the slurry stored in the slurry storage tank.

### Advantageous Effects of Invention

According to an embodiment of the present disclosure, an electrode slurry storage device for a secondary battery which may minimize air bubbles remaining inside a slurry may be provided.

According to an embodiment of the present disclosure, the fluidity of air bubbles inside an electrode slurry for a secondary battery may be increased during a defoaming process of the electrode slurry.

### Brief Description of Drawings

FIG. 1 is a front view illustrating an appearance of the slurry storage device.
FIG. 2 is a cross-sectional view taken along line I-I' of FIG. 1 as a slurry storage device in a state in which a slurry is not stored.
FIG. 3 is a front view illustrating a rotating unit, a support unit, a rotating blade, and a degassing blade.
FIG. 4 is a perspective view illustrating a rotating unit, a support unit, and a rotating blade.
FIG. 5 is a perspective view illustrating a slurry storage tank in which a rotating unit, a support unit, a rotating blade, and a slurry are accommodated.
FIG. 6 is a perspective view of a slurry storage tank including a degassing blade, a shaft, and a rotating blade.
FIG. 7 is an exploded perspective view of a degassing blade.

### Best Mode for Invention

Prior to describing embodiments of the present disclosure in detail, it should be understood that the terms used in the specification and the appended claims should not be construed as being limited to general and dictionary meanings, but interpreted based on the meanings and concepts corresponding to technical aspects of the present disclosure on the basis of the principle that the inventor is allowed to define terms appropriately for the best explanation. Therefore, it should be understood that the embodiments described in this specification and the configurations illustrated in the drawings are only the most desirable embodiments of the disclosed technology and do not represent all the technical concepts of disclosed technology, and accordingly, there may be various equivalents and variations that can replace the embodiments and the configurations of the disclosed technology at the time of this application.

Hereinafter, with reference to the drawings, specific embodiments of the present disclosure will be described. In this case, it should be noted that in the attached drawings, identical components are indicated by identical symbols whenever possible. Additionally, detailed descriptions of well-known functions and configurations that may obscure the gist of the present disclosure will be omitted. For the same reason, some components are exaggerated, omitted, or schematically depicted in the accompanying drawings, and the size of each component does not entirely reflect the actual size thereof.

An embodiment of the present disclosure relates to an electrode slurry storage device for a secondary battery. Hereinafter, a storage device according to the present disclosure will be specifically described with reference to the drawings.

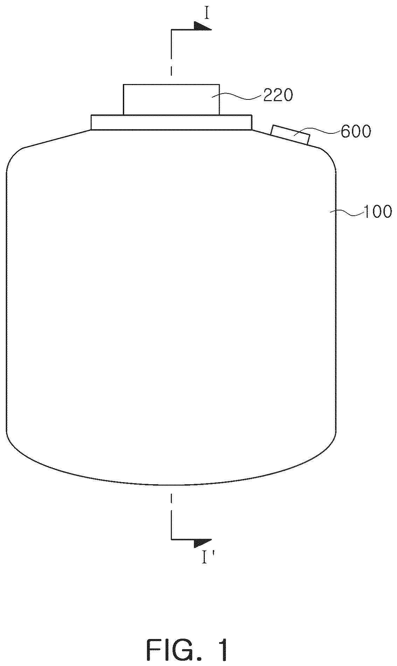

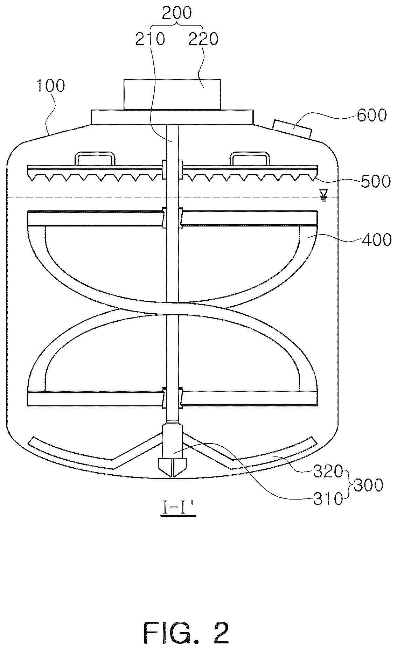

FIG. 1 is a front view illustrating an appearance of the slurry storage device, and FIG. 2 is a cross-sectional view taken along line I-I' of FIG. 1 as a slurry storage device in a state in which a slurry is not stored.

Referring to FIGS. 1 and 2, an electrode slurry storage device for a secondary battery according to an embodiment of the present disclosure may include a slurry storage tank 100, a rotating unit 200, a degassing blade 500, a rotating blade 400, and a negative pressure pump 600.

The slurry storage tank 100 may protect a slurry from an external environment and may store the slurry in an internal space.

A rotating unit 200 may be stored inside the slurry storage tank 100. The rotating unit 200 may provide driving force so that a support unit 300, the degassing blade 500, and the rotating blade 400 inside the slurry storage tank 100 may rotate. For example, the rotating unit 200 may drive the degassing blade 500 and the rotating blade 400 to rotate together. The rotating unit 200 may include a shaft 210 and a driving motor 220. The shaft 210 may be connected to the driving motor 220, and may rotate by receiving driving force from the driving motor 220. The shaft 210 may be disposed in upward and downward directions in the center of the slurry storage tank 100.

The driving motor 220 may be provided on the outside of the slurry storage tank 100, and the driving motor 220 may transmit driving force to the shaft 210 provided inside the slurry storage tank 100. For example, the driving motor 220 may be disposed in one end (upper portion) of the slurry storage tank 100.

The support unit 300 connected to the shaft 210 may be disposed in a lower portion of an internal space of the slurry storage tank 100. The support unit 300 may include a support shaft 310 connected to the shaft 210 and a stirring blade 320 connected to the support shaft 310.

The support shaft 310 may be connected to the shaft 210 and may rotate together with the shaft 210 by rotating the shaft 210. Accordingly, the stirring blade 320 connected to the support shaft 310 may also rotate together with the shaft 210 as the shaft 210 rotates.

The support shaft 310 and the stirring blade 320 may be disposed in a lower portion of the slurry storage tank 100. For example, the support shaft 310 may be provided in a position in which the shaft 210 extends, and a lower portion of the support shaft 310 may be in contact with a lower end of the internal space of the slurry storage tank 100. Additionally, the stirring blade 320 may be installed in a lower portion of the internal space of the slurry storage tank 100. The stirring blade 320 may be disposed in a lower portion of the rotating blade 400. The stirring blade 320 may rotate by the driving of the rotating unit 200 and simultaneously stir the slurry stored inside the slurry storage tank 100. Since the stirring blade 320 may be provided in a lower end of the slurry storage tank 100, the slurry in the lower portion of the slurry storage tank 100 may be stirred and moved to an upper portion of the slurry storage tank 100.

The degassing blade 500 may be disposed inside the slurry storage tank 100. The degassing blade 500 may physically strike and burst air bubbles within the slurry. The degassing blade 500 may be connected to the shaft 210 and rotated, but the present disclosure is not limited thereto, and the degassing blade 500 may be accommodated inside the slurry storage device through a separate connection member.

The rotating blade 400 may be disposed inside the slurry storage tank 100. The rotating blade 400 may stir air bubbles within the slurry.

The rotating blade 400 may include a linear blade 410 and a spiral blade 420. The linear blade 410 may be connected to the shaft 210 and may rotate together with the shaft 210 as the shaft 210 rotates. The spiral blade 420 may be formed in a spiral shape and may be provided inside the slurry storage device, and may be connected to the linear blade 410. Accordingly, the linear blade 410 rotates, and the spiral blade 420 may also rotate, and the spiral blade 420 may rotate and simultaneously stir the slurry inside the slurry storage tank 100.

The slurry storage tank 100 may be provided with the negative pressure pump 600. The negative pressure pump may be connected to the inside of the slurry storage tank 100, and may put the inside of the slurry storage tank 100 into a negative pressure state. Any negative pressure pump may be sufficient applied as long as the negative pressure pump may reduce internal pressure of the slurry storage device to generate a pressure gradient, and a vacuum pump may also be used as the negative pressure pump.

When the internal pressure of the slurry storage tank 100 becomes a negative pressure state, air bubbles within the slurry stored in the slurry storage tank 100 may be expanded, and the internal pressure of the air bubbles may be reduced. Accordingly, as the internal pressure of the air bubble decreases, the air bubble may be effectively removed when physically striking the air bubbles with the degassing blade 500. Additionally, the negative pressure pump 600 may be connected to an upper end of the slurry storage tank 100, so that a pressure difference may occur inside the slurry storage tank 100. Since the negative pressure pump 600 is connected to an upper portion of the internal space of the slurry storage tank 100 to generate the negative pressure, and thus, when the pressure of the upper portion of the internal space of the slurry storage tank 100 decreases, the pressure difference may occur between the lower portion and the upper portion of the slurry storage tank 100. Accordingly, the air bubbles included in the slurry may move from a lower portion to an upper portion of the slurry storage tank 100. In addition to the effect of the rotating blade 400 described below, due to the negative pressure pump 600 connected to the upper end of the slurry storage tank 100, the air bubbles within the slurry may effectively move to the upper portion of the slurry storage tank 100.

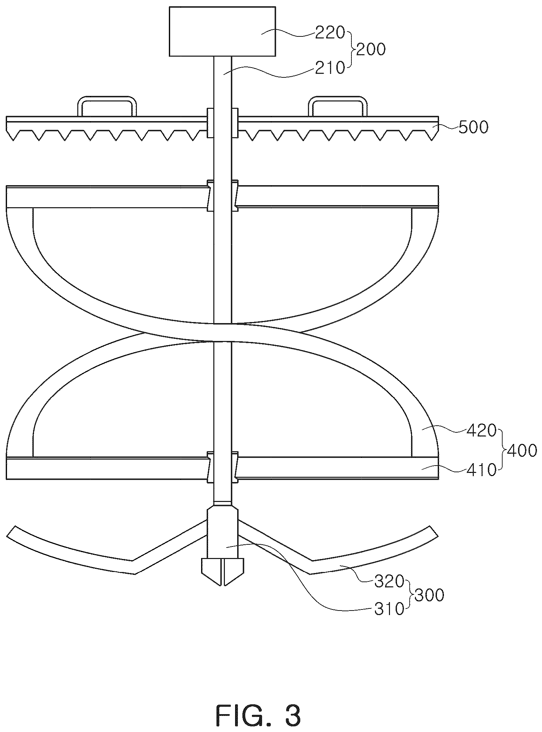

FIG. 3 is a front view illustrating a rotating unit 200, a support unit 300, a rotating blade 400, and a degassing blade 500.

Referring to FIG. 3, the rotating unit 200 may include a shaft 210 and a driving motor 220, and units connected to the shaft 210 may be able to rotate around the shaft 210. For example, the shaft 210 may receive driving force from the driving motor 220 and may rotate clockwise or counterclockwise around the shaft 210. The support unit 300, the rotating blade 400, and the degassing blade 500 may be connected to the shaft 210.

The support unit 300 may be connected to a lower end of the shaft 210. For example, the support shaft 310 may be connected to the lower end of the shaft 210, and the stirring blade 320 may be connected to the support shaft 310. The stirring blades 320 may be disposed on both sides of the support shaft 310 and may rotate around the support shaft 310. Accordingly, slurries in the lower end of the slurry storage tank 100 may be stirred.

The rotating blade 400 may include a linear blade 410 and a spiral blade 420 formed in a spiral shape.

Referring to FIG. 3, the spiral blade 420 may be connected to the linear blade 410 and may have a spiral shape of rotating around the shaft 210. The spiral blade 420 may be provided in plural, each of which may be disposed to form a spiral shape.

The linear blade 410 may be installed in plural, by including upper and lower ends of the shaft, and the linear blades 410 may be disposed to be connected to both ends of the spiral blade 420. For example, FIG. 3 illustrates a form in which the linear blades 410 are connected only to both ends of the spiral blade 420, but the linear blade 410 may also be connected to an intermediate end of the spiral blade 420.

One end of the linear blade 410 may be connected to the spiral blade 420, and the other end of the linear blade 410 may be connected to the shaft 210. The linear blade 410 may be vertically connected to both sides of the shaft 210.

The degassing blade 500 may be disposed on an upper portion of the rotating blade 400, and may be thus connected to the shaft 210. The degassing blade 500 may be disposed symmetrically with respect to the shaft 210 and may include a striking member 510. The degassing blade 500 may rotate around the shaft 210 as an axis and may strike the air bubbles within the slurry moved upwardly.

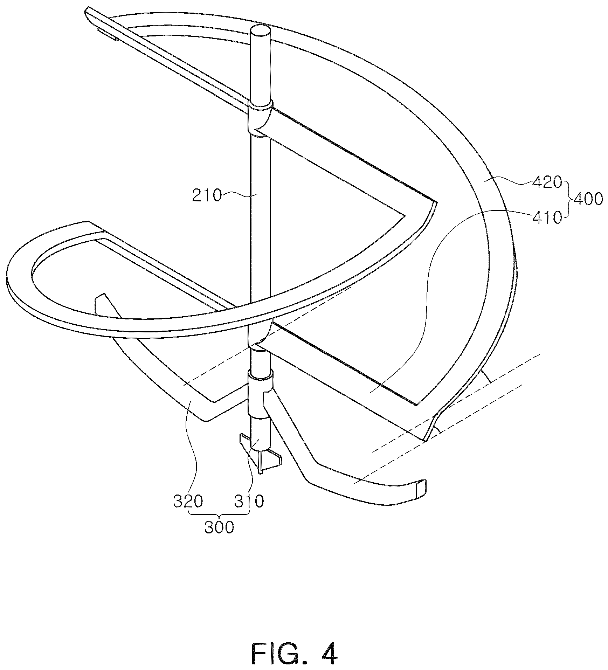

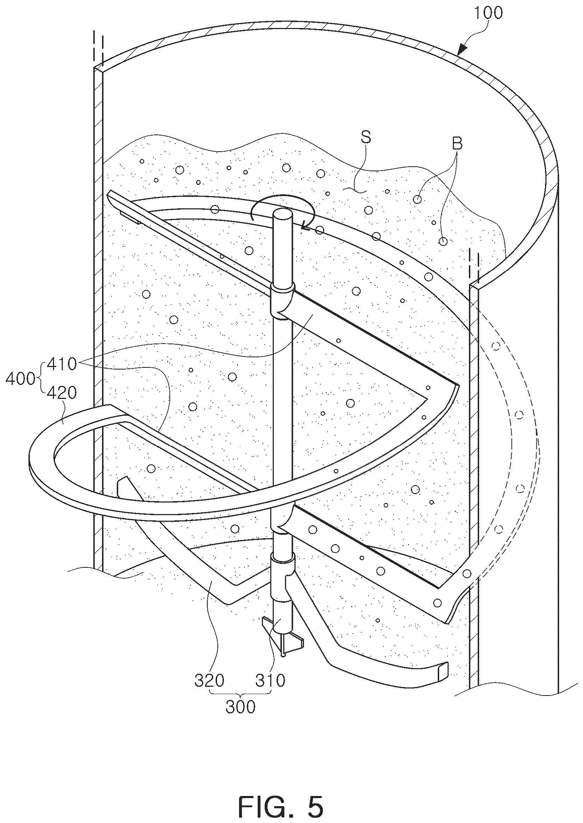

FIG. 4 is a perspective view illustrating a rotating unit 200, a support unit 300, and a rotating blade 400, and FIG. 5 is a perspective view illustrating a rotating unit 200, a support unit 300, a rotating blade 400, and a slurry storage tank 100 storing slurry. An embodiment illustrated in FIGS. 4 and 5 may include a degassing blade 500, but the degassing blade 500 is omitted in the drawings to clearly illustrate the rotating blade 400.

Referring to FIG. 5, a spiral blade 420 may be formed in a shape wound along an inner wall from the lower portion to the upper portion of the slurry storage tank 100, and accordingly, a height difference may be generated in both ends of the spiral blade 420. Since the linear blade 410 may be connected to both ends of the spiral blade 420, a plurality of blades may be disposed on the shaft 210 by changing a height difference.

The spiral blade 420 may be disposed adjacently to the inner wall of the slurry storage tank 100, and may be disposed in a shape wound along the inner wall from the lower portion to the upper portion of the slurry storage tank 100. The spiral blade 420 may be connected to the linear blade 410, and since the linear blade 410 may be connected to the shaft 210, the spiral blade 420 may also rotate as the shaft 210 rotates. When the spiral blade 420 rotates, the slurry stored inside the slurry storage tank 100 may be stirred in a manner that the slurry moves along the inner wall of the slurry storage tank 100. The slurry stored inside the slurry storage tank 100 may move to the upper portion or the lower portion of the slurry storage tank 100 depending on a rotational direction of the shaft 210. That is, the slurry may be set to rotate in a direction in which the slurry moves up to the upper portion of the slurry storage tank 100 along the spiral blade 420, and accordingly, the slurry may move upwardly. For example, when the rotational direction of the shaft 210 is set as illustrated in FIG. 5, the stored slurry may move to the upper portion of the slurry storage device.

Referring to FIG. 4, one end of the linear blade 410 may be connected to the shaft 210, and the other end thereof may be connected to the rotating blade 400. The linear blade 410 may be disposed on the shaft 210 in a state of being obliquely inclined with respect to the rotational direction of the linear blade 410.

The linear blade 410 may be disposed at an acute angle based on a horizontal axis, perpendicular to the shaft 210. Additionally, the spiral blade 420 may be connected along a direction in which the linear blade 410 is inclined. However, at a point in which the linear blade 410 and the spiral blade 420 are connected to each other, an angle between the horizontal axis and the linear blade 410 and an angle between the horizontal axis and the spiral blade 420 may be different from each other.

That is, the linear blade 410 may be disposed on the shaft 210 in a state of being inclined with respect to the horizontal axis. The linear blade 410 may rotate around the shaft 210 as the rotation axis, and thus, when the linear blade 410 is slantedly disposed, the linear blade 410 may have an increased contact area with the slurry, which may make it easy to stir the slurry and may simultaneously allow the slurry to easily move to the upper portion of the slurry storage tank 100.

Accordingly, when the linear blade 410 and the spiral blade 420 connected to the shaft 210 rotate, the slurry stored inside the slurry storage tank 100 may move along the direction in which the linear blade 410 is inclined. Additionally, the slurry moved through the inclined linear blade 410 may move along the spiral blade 420 connected to the linear blade 410, so that the slurry may move to the upper portion of the slurry storage tank 100 along the spiral blade 420.

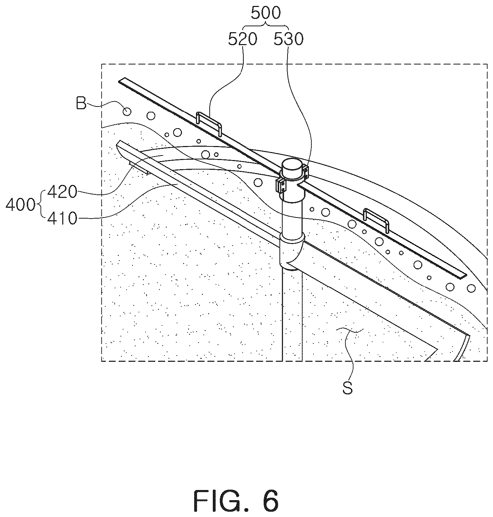

FIG. 6 is a perspective view of a slurry storage tank 100 including a degassing blade 500, a shaft 210, and a rotating blade 400.

Generally, air bubbles within a slurry have a specific gravity difference from the slurry, and due to the specific gravity difference, the air bubbles move to the upper portion of the slurry storage tank 100. Accordingly, the degassing blade 500 may be provided in the upper portion of the slurry storage tank 100, and the air bubbles moved upwardly may be effectively removed.

In one embodiment of the present disclosure, as illustrated in FIG. 6, the degassing blade 500 may be disposed in the upper portion of the slurry storage tank 100, and may be disposed in the upper portion the rotating blade 400. As the rotating blade 400 rotates, the slurry in the slurry storage tank 100 may be stirred, and the air bubbles within the slurry may move to the upper portion of the slurry storage tank 100 due to the specific gravity difference from the slurry and the rotating blade 400.

In the slurry storage tank 100, the slurry may be stored by a height lower than a position of the degassing blade 500, and the slurry may be continuously stirred by the rotating blade 400. Additionally, although not illustrated in FIG. 6, as described above, a pressure gradient may be generated due to the negative pressure pump 600 disposed in the upper portion of the storage tank, and the air bubbles within the slurry may move to the upper portion of the slurry storage tank 100. The degassing blade 500 may physically strike the moving air bubbles and may remove the air bubbles.

The degassing blade 500 may include a striking member 510 for physically striking the air bubbles. Since the degassing blade 500 may be disposed on the upper portion of the slurry storage device 100, the striking member 510 may be disposed on a lower end of a body of the degassing blade 500 to strike the slurry moving upwardly in the internal space of the slurry storage device 100. For example, the striking member may be disposed in a shape protruding from the degassing blade 500 toward the lower portion of the slurry storage device 100, and the striking member 510 may form a tapered portion while protruding, thus forming a shape in which a cross-sectional area decreases along the lower portion of the slurry storage device 100. Accordingly, one end of the striking member 510 may have a reduced cross-sectional area, which may make it easy to burst the air bubbles.

The striking member 510 may have a shape in which an end or a side surface is sharp so as to easily break the air bubbles, but the present disclosure is not limited thereto. For example, the striking member 510 may have a shape of a blade, an awl, or the like, but various changes of the striking member 510 are possible as long as striking member 510 may physically remove the air bubbles by applying pressure. In an embodiment of the present disclosure, the striking member 510 of the degassing blade 500 may be a blade in which an end thereof is sharp so as to apply high pressure to the air bubbles by reducing a contact surface.

Since the striking member 510 should continuously apply pressure higher than internal pressure of the air bubbles, management is required to prevent the striking member 510 from being softened. In an embodiment of the present disclosure, a replacement member 520 may be included in the degassing blade 500 for convenience of replacing the degassing blade 500.

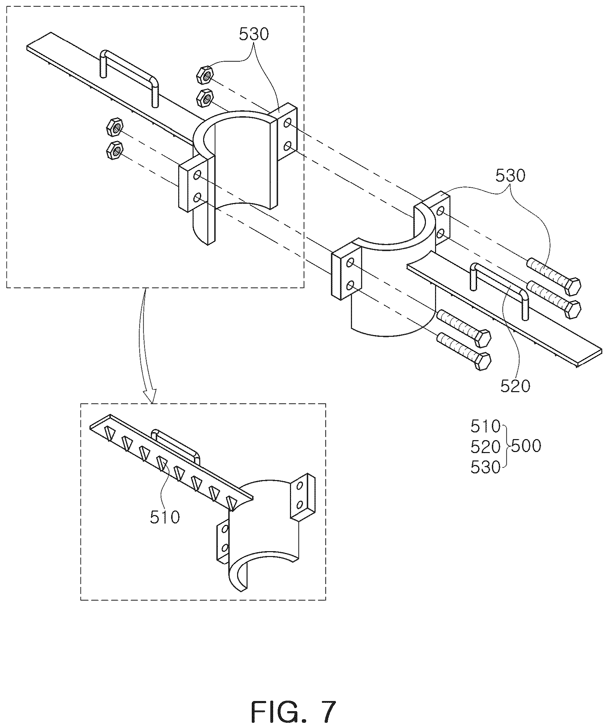

FIG. 7 is an exploded perspective view of a degassing blade 500.

The degassing blade 500 may include a fastening member 530 as illustrated in FIG. 7, and may be coupled to the shaft 210 through the fastening member 530. Accordingly, the shaft 210, the rotating blade 400, and the degassing blade 500 may rotate together. For example, the fastening member 530 may be a bolt, a nut, a pin, or the like, but the present disclosure is not limited thereto, and the fastening member 530 is sufficient as long as the degassing blade 500 may be coupled to rotate together with the shaft 210.

However, the degassing blade 500 may not include the fastening member 530 and may be accommodated inside the slurry storage device 100 through a separate connecting member, and may not be connected to the shaft. In this case, the degassing blade 500 may not rotate inside the slurry storage tank 100.

Although the example embodiment of the present disclosure has been described in detail above, it will be obvious to those skilled in the art that the scope of the present disclosure is not limited thereto, and various modifications and variation may be made without departing from the technical concept of the present disclosure described in the claims.

For example, some of the components in the above-described embodiments may be deleted and implemented, and each embodiment may be implemented in combination with each other.

## Claims

1. An electrode slurry storage apparatus for a secondary battery, comprising:
a slurry storage tank storing an electrode slurry for a secondary battery;
a degassing blade accommodated inside the slurry storage tank; and
a rotating unit providing driving force for rotating the degassing blade;
a negative pressure pump connected to an inside of the slurry storage tank and taking the inside of the slurry storage tank into a negative pressure state,
wherein the degassing blade physically strikes air bubbles within the slurry storage tank.

2. The electrode slurry storage apparatus for a secondary battery of claim 1, further comprising:
a rotating blade stirring a slurry stored inside the slurry storage tank,
wherein the rotating unit rotates the rotating blade and the degassing blade together.

3. The electrode slurry storage apparatus for a secondary battery of claim 2, wherein the degassing blade is disposed above the rotating blade.

4. The electrode slurry storage apparatus for a secondary battery of claim 1, wherein the degassing blade includes a striking member,
the degassing blade is disposed in an upper portion of an internal space of the slurry storage tank, and
the striking member is disposed on a lower side of the degassing blade.

5. The electrode slurry storage apparatus for a secondary battery of claim 4, wherein the striking member is disposed in a shape protruding from the degassing blade toward a lower portion of the slurry storage tank.

6. The electrode slurry storage apparatus for a secondary battery of claim 5, wherein the striking member forms a tapered portion in which a width thereof in a lower direction is narrow.

7. The electrode slurry storage apparatus for a secondary battery of claim 1, further comprising:
a support unit connected to the rotating unit to support the rotating unit,
wherein the rotating unit rotates the degassing blade and the support unit together.

8. The electrode slurry storage apparatus for a secondary battery of claim 7, wherein the support unit includes:
a support shaft connected to one end of the rotating unit; and
a stirring blade connected to the support shaft and stirring a slurry stored in the slurry storage tank.

9. The electrode slurry storage apparatus for a secondary battery of claim 1, wherein the negative pressure pump is provided in an upper end of the slurry storage tank.

10. The electrode slurry storage apparatus for a secondary battery of claim 1, wherein the rotating unit includes a shaft and a driving motor,
wherein the driving motor is connected to the shaft and is disposed in one end of the slurry storage device, and
the degassing blade is connected to the shaft.

11. An electrode slurry storage apparatus for a secondary battery, comprising:
a slurry storage tank storing an electrode slurry for a secondary battery;
a rotating blade stirring the slurry stored inside the slurry storage tank;
a rotating unit providing driving force for rotating the rotating blade; and
a negative pressure pump connected to an inside of the slurry storage tank and taking the inside of the slurry storage tank into a negative pressure state.

12. The electrode slurry storage apparatus for a secondary battery of claim 11, wherein the rotating blade includes a spiral blade having a spiral shape and a linear blade.

13. The electrode slurry storage apparatus for a secondary battery of claim 12, wherein the rotating unit includes a shaft, and
one end of the linear blade is connected to the spiral blade, and the other end of the linear blade is connected to the shaft.

14. The electrode slurry storage apparatus for a secondary battery of claim 13, wherein the linear blades are disposed on both upper and lower sides of the shaft, and are disposed on the shaft in a state of being obliquely inclined with respect to a rotational direction of the linear blades.

15. The electrode slurry storage apparatus for a secondary battery of claim 12, wherein the spiral blade is disposed along an inner wall of the slurry storage tank, so that the slurry stored in the slurry storage tank moves along the inner wall.

16. The electrode slurry storage apparatus for a secondary battery of claim 12, wherein the spiral blade is provided in plural.

17. The electrode slurry storage apparatus for a secondary battery of claim 11, wherein the negative pressure pump is provided in an upper end of the slurry storage tank.

18. The electrode slurry storage apparatus for a secondary battery of claim 11, further comprising:
a support unit connected to the rotating unit to support the rotating unit.

19. The electrode slurry storage apparatus for a secondary battery of claim 18, wherein the rotating unit rotates the rotating blade and the support unit together.

20. The electrode slurry storage apparatus for a secondary battery of claim 18, wherein the support unit includes:
a support shaft connected to one end of the rotating unit; and
a stirring blade connected to the support shaft and stirring the slurry stored in the slurry storage tank.
